# EUROPÄISCHE PATENTSCHRIFT

(11) **EP 2 505 529 B1**
(45) Veröffentlichungstag und Bekanntmachung des Hinweises auf die Patenterteilung: **21.05.2014**
(21) Anmeldenummer: 12000632.5
(22) Anmeldetag: 01.02.2012
(51) Int. Cl.: B65G 47/91, B25J 15/00

(54) **Handhabungsvorrichtung zur Handhabung von Gegenständen**
Handling device for handling objects
Dispositif de manipulation d'objets

(30) Priorität: 29.03.2011 DE 202011004528 U
(43) Veröffentlichungstag der Anmeldung: 03.10.2012
(73) Patentinhaber: FESTO AG & Co. KG, 73734 Esslingen (DE)
(72) Erfinder: Beier, Martin, 72644 Oberboihingen (DE)
(74) Vertreter: Abel, Martin

(56) Entgegenhaltungen:
- DE-A1- 1 928 397
- US-A- 4 901 504
- US-A- 5 290 134
- US-B1- 6 439 631

## Beschreibung

Die Erfindung betrifft eine Handhabungsvorrichtung zur Handhabung von Gegenständen, mit mehreren in Achsrichtung einer Hauptachse aufeinanderfolgend angeordneten Handhabungseinheiten, die jeweils eine längliche Gestalt mit parallel zueinander ausgerichteten und sich rechtwinkelig zu der Hauptachse erstreckenden Längsachsen aufweisen und von denen zumindest mehrere in Achsrichtung der Hauptachse verschiebbar an einer Linearführungseinrichtung gelagert sind, ferner mit einer alle Handhabungseinheiten kinematisch miteinander koppelnden Hebelstruktur, die mehrere untereinander gelenkig verbundene und jeweils an einer der Handhabungseinheiten um eine dieser seitlich zugeordneten Gelenkachse verschwenkbar gelagerte Koppelhebel aufweist und die bewirkt, dass beim Verschieben nur einer Handhabungseinheit auch jede weitere verschiebbar gelagerte Handhabungseinheit verschoben wird, und mit einer Antriebseinrichtung, die ein zu einer Antriebsbewegung in Achsrichtung der Hauptachse antreibbares Antriebselement aufweist, das an einer Krafteinleitungsstelle mit einer der verschiebbaren Handhabungseinheiten antriebsmäßig verbunden ist, wobei die Krafteinleitungsstelle an der mit dem Antriebselement antriebsmäßig verbundenen Handhabungseinheit auf der gleichen Seite wie die zugeordnete Gelenkachse im Bereich dieser Gelenkachse angeordnet ist und wobei die Linearführungseinrichtung eine eine Führungsebene definierende Führungsschiene mit linearer Erstreckung aufweist, deren Längsachse mit der Hauptachse zusammenfällt oder parallel zu dieser verläuft und an der die Handhabungseinheiten angeordnet sind.

Eine aus der JP 42-83088 A2 bekannte Handhabungsvorrichtung verfügt über mehrere, jeweils mit einem Sauggreifer ausgestattete Handhabungseinheiten, die an einer Führungsstange linear verschiebbar gelagert sind und zwischen denen eine durch eine Hebelstruktur bewirkte kinematische Kopplung vorliegt. Wenn eine der Handhabungseinheiten ortsfest fixiert ist und auf eine der verschiebbar gelagerten Handhabungseinheiten eine Stellkraft ausgeübt wird, findet eine Relativbewegung zwischen sämtlichen Handhabungseinheiten statt, so dass sie entweder unter Vergrößerung des gegenseitigen Abstandes auseinandergespreizt oder zusammengefahren werden. Die Stellkraft wird in die betreffende Handhabungseinheit durch ein Antriebselement eingeleitet, das von einer Antriebsspindel zu einer linearen Antriebsbewegung antreibbar ist. Die zugehörige Krafteinleitungsstelle befindet sich an einer Oberseite der Handhabungseinheit, während die Hebelstruktur mittels einer Gelenkachse seitlich an der Handhabungseinheit gelagert ist. Wenn die Antriebsbewegung mit hoher Beschleunigung ausgeführt wird, besteht die Gefahr von Verwindungen der zugeordneten Handhabungseinheit, so dass mit einem erhöhten Verschleiß zu rechnen ist. Zudem werden die Handhabungseinheiten durch die für die Erzeugung der Antriebsbewegung zuständige Antriebseinrichtung stark verdeckt, so dass sie bei Anschluss- und Wartungsarbeiten nur sehr schwer zugänglich sind.

Eine aus der US 3,610,673 bekannte Handhabungseinheit verfügt über eine scherengitterartig aufgebaute Hebelstruktur, an der von Saugnäpfen gebildete Handhabungseinheiten ohne gesonderte Führungsmittel angeordnet sind, wobei die Saugnäpfe an äußeren Gelenkstellen sitzen, so dass das Expandieren und Zusammenziehen der Hebelstruktur auch eine Hubbewegung der Saugnäpfe bewirkt. Vergleichbare Gegebenheiten liegen bei einer in der US 3,860,280 beschriebenen Greifvorrichtung vor.

In der US 6,439,631 B1 ist eine Handhabungsvorrichtung beschrieben, bei der mehrere Handhabungseinheiten an einer pantographartig gestalteten Hebelstruktur fixiert sind und wobei ein durch einen Servomotor angetriebener Riemen für die Erzeugung der Relativbewegung zwischen den einzelnen Hubeinheiten verantwortlich ist.

Die WO 2011/006517 A1 offenbart eine Arbeitsvorrichtung zur Handhabung von Gegenständen, bei der mehrere Handhabungseinheiten an einer gemeinsam zugeordneten Führungsschiene linear verschiebbar geführt sind. Jede Handhabungseinheit enthält einen beispielsweise als Saugnapf ausgebildeten Endeffektor, mit dessen Hilfe sich ein umzupositionierender Gegenstand zeitweilig festhalten lässt.

Aus der US-A-5 290 134 ist eine Handhabungsvorrichtung der eingangs genannten Art bekannt, bei der an einer eine vertikale Führungsebene definierenden Führungsschiene mehrere Handhabungseinheiten gelagert sind, deren Längsachsen vertikal ausgerichtet sind und die mittels einer Hebelstruktur antreibbar sind. Die Hebelstruktur enthält mehrere mit den Handhabungseinheiten gelenkig verbundene Koppelhebel, wobei die Gelenkachsen parallel zu der Führungsebene und zu den Längsachsen der Handhabungseinheiten ausgerichtet sind.

Der Erfindung liegt die Aufgabe zugrunde, eine gut zugängliche und verschleißarme Handhabungseinrichtung zur Handhabung von Gegenständen zu schaffen.

Zur Lösung dieser Aufgabe ist in Verbindung mit den eingangs genannten Merkmalen vorgesehen, dass die Gelenkachsen rechtwinkelig zur Führungsebene der Führungsschiene ausgerichtet sind, wobei die Handhabungseinheiten mit rechtwinkelig zu den Gelenkachsen ausgerichteten Längsachsen an der Führungsschiene angeordnet sind und wobei die Antriebseinrichtung der Führungsebene auf der gleichen Seite wie die Hebelstruktur mit Abstand vorgelagert ist.

Auf diese Weise wird die für das relative Verschieben der Handhabungseinheiten verantwortliche Stellkraft unmittelbar dort in die angetriebene Handhabungseinheit eingeleitet, wo der Kraftabgriff der Hebelstruktur zur Ankopplung der anderen Handhabungseinheiten stattfindet. Dies hat unter anderem zur Folge, dass die durch die Hebelstruktur auf die angetriebene Handhabungseinheit ausgeübten Reaktionskräfte unmittelbar von dem Antriebselement aufgenommen werden können und keine ungünstigen Drehmomente in die Handhabungseinheit einleiten können, so dass ein verschleißarmer Betrieb der Handhabungsvorrichtung möglich ist. Außerdem, und nicht weniger wichtig, sind die Handhabungseinheiten aufgrund des Umstandes, dass sich das Antriebselement auf der gleichen Seite wie die Hebelstruktur befindet, optimal zugänglich für Anschluss-, Einrichtungs- und Wartungsarbeiten. Unter anderem besteht auch die vorteilhafte Möglichkeit, an einer rechtwinkelig zu den Gelenkachsen orientierten Stirnseite der Handhabungseinheiten gut zugängliche Anschlussmittel für fluidische und/oder elektrische Leitungen vorzusehen, die für den Betrieb der Handhabungseinheiten eventuell notwendig sind. Die Linearführungseinrichtung weist zur Führung der Handhabungseinheiten eine Führungsschiene auf, die eine zu den Gelenkachsen rechtwinkelige Führungsebene definiert, der die Antriebseinrichtung auf der gleichen Seite mit Abstand vorgelagert ist wie auch die Hebelstruktur.

Vorteilhafte Weiterbildungen der Erfindung gehen aus den Unteransprüchen hervor.

Es ist zweckmäßig, wenn die Gelenkachse, die zu der mit dem Antriebselement verbundenen Handhabungseinheit gehört, von einem Lagerbolzen definiert ist, der von der Handhabungseinheit wegragt. Das Antriebselement ist dabei mit diesem Lagerbolzen antriebsmäßig verbunden.

Der Lagerbolzen ist vorzugsweise unbeweglich an der zugeordneten Handhabungseinheit befestigt. Er kann beispielsweise angeschraubt oder angeschweißt sein. Ebenso besteht die Möglichkeit, ihn einstückig mit einer Gehäusekomponente der Handhabungseinheit auszubilden.

Mindestens ein Koppelhebel der Hebelstruktur ist schwenkbeweglich auf den Lagerbolzen aufgesteckt. Besonders zweckmäßig ist es, die Krafteinleitungsstelle auf der der Handhabungseinheit in Achsrichtung der Gelenkachse abgewandten Seite der Hebelstruktur anzuordnen. Die Hebelstruktur kommt mithin zwischen der Krafteinleitungsstelle und der Handhabungseinheit zu liegen. Auf diese Weise kann die Hebelstruktur optimal nahe bei den Handhabungseinheiten platziert werden.

Zwischen dem Antriebselement und der Handhabungseinheit liegt im Bereich der Krafteinleitungsstelle zweckmäßigerweise eine feste und insbesondere starre Verbindung vor. Es besteht allerdings auch die Möglichkeit, zur Gewährleistung eines selbständigen Ausgleiches von Fertigungstoleranzen eine Kupplungseinrichtung zwischenzuschalten, die quer zur Richtung der Antriebsbewegung Relativbewegungen zwischen dem Antriebselement und der mit diesem verbundenen Handhabungseinheit zulässt.

Das Antriebselement ist zweckmäßigerweise so angeordnet, dass es der mit ihm antriebsmäßig verbundenen Handhabungseinheit in Achsrichtung der zugeordneten Gelenkachse mit Abstand vorgelagert ist.

Wenn das Antriebselement seine Antriebsbewegung ausführt, bewegt es sich zweckmäßigerweise entlang einer linearen Antriebslinie, die parallel zu der Hauptachse ausgerichtet ist. Zweckmäßig ist es dabei, wenn die Antriebseinrichtung so angeordnet ist, dass die Antriebslinie in einer gemeinsamen Ebene mit den an den Handhabungseinheiten vorgesehenen Gelenkachsen verläuft.

Bei einer bevorzugten Ausgestaltung der Antriebseinrichtung ist das Antriebselement nach Art einer Mutter auf eine Antriebsspindel aufgeschraubt und steht mit dieser Antriebsspindel axial bewegbar in Eingriff. Wenn die Antriebsspindel rotiert, führt das durch die Verbindung mit der zugeordneten Handhabungseinheit an einer Drehbewegung gehinderte Antriebselement die lineare Antriebsbewegung aus. Die Antriebsspindel ist zweckmäßigerweise so ausgerichtet, dass sich ihre Längsachse zumindest im Wesentlichen in einer gemeinsamen Ebene mit den den Handhabungseinheiten zugeordneten Gelenkachsen erstreckt.

Eine ebenfalls vorteilhaft aufgebaute Antriebseinrichtung enthält eine zu einer Linearbewegung in ihrer Längsrichtung antreibbare Antriebsstange, an der das Antriebselement angeordnet ist. Das Antriebselement kann bezüglich der Antriebsstange separat oder einstückig ausgebildet sein. Die Antriebsstange ist insbesondere so ausgerichtet, dass ihre Längsachse zumindest im Wesentlichen in einer gemeinsamen Ebene mit den den Handhabungseinheiten zugeordneten Gelenkachsen verläuft.

Die Antriebseinrichtung kann vom manuell betätigbaren Typ sein, so dass durch manuelles Aufbringen einer Betätigungskraft die Antriebsbewegung des Antriebselementes hervorrufbar ist. Hierzu kann die Antriebseinrichtung beispielsweise eine Kurbel aufweisen. Vor allem dann, wenn die Handhabungseinheit in einen automatisch ablaufenden Handhabungsprozess eingebunden werden soll, empfiehlt sich allerdings eine Antriebseinrichtung maschinellen Typs, beispielsweise von der Art, die mittels Fluidkraft und/oder elektrisch antreibbar ist. Eine solche Antriebseinrichtung kann beispielsweise als Antriebsquelle einen Elektromotor oder einen fluidbetätigten Arbeitszylinder enthalten.

Die Linearführungseinrichtung weist zweckmäßigerweise eine und insbesondere genau eine sich in Achsrichtung der Hauptachse erstreckende Führungsschiene auf, an der die Handhabungseinheiten gemeinsam und unabhängig voneinander linear verschiebbar geführt sind. Das mit einer der Handhabungseinheiten kooperierende Antriebselement ist der Führungsschiene zweckmäßigerweise in Achsrichtung der Gelenkachsen mit Abstand vorgelagert. Zweckmäßig ist es, wenn die lineare Antriebslinie, entlang der sich das Antriebselement bei seiner Antriebsbewegung bewegt, gemeinsam mit der Längsachse der Führungsschiene und den den Handhabungseinheiten zugeordneten Gelenkachsen in einer gemeinsamen Ebene liegen. Im Betrieb der Handhabungsvorrichtung ist diese gemeinsame Ebene insbesondere horizontal ausgerichtet.

Von den vorhandenen Handhabungseinheiten sind zweckmäßigerweise alle bis auf eine in Achsrichtung der Hauptachse verschiebbar an der Linearführungseinrichtung geführt. Die verbleibende eine Handhabungseinheit ist an der Linearführungseinrichtung zweckmäßigerweise ortsfest fixiert, zu welchem Zweck sie auf eine Führungsschiene der Linearführungseinrichtung aufgesteckt und mit selbiger verspannt sein kann.

Die für das Auseinanderspreizen und Zusammenziehen der Hubeinheiten verantwortliche Hebelstruktur enthält zweckmäßigerweise einen Hebelstrang, der mehrere zick-zack-artig aufeinanderfolgende und aneinander angelenkte Koppelhebel enthält, die jeweils mit Abstand zu denjenigen Stellen, an denen sie untereinander gelenkig gelagert sind, im Bereich der schon erwähnten Gelenkachsen an jeweils einer Handhabungseinheit angelenkt sind. Besonders zweckmäßig ist eine Hebelstruktur, die einen scherenartigen oder scherengitterartigen Aufbau hat und sich aus zwei gegenläufigen Hebelsträngen der vorgenannten Art zusammensetzt. Man kann hier auch von einer pantographartigen Hebelstruktur sprechen. An jeder Handhabungseinheit sind an ein und derselben Gelenkachse zwei zu jeweils einem der beiden Hebelstränge gehörende Koppelhebel verschwenkbar gelagert.

Nachfolgend wird die Erfindung anhand der beiliegenden Zeichnung näher erläutert. In dieser zeigen:

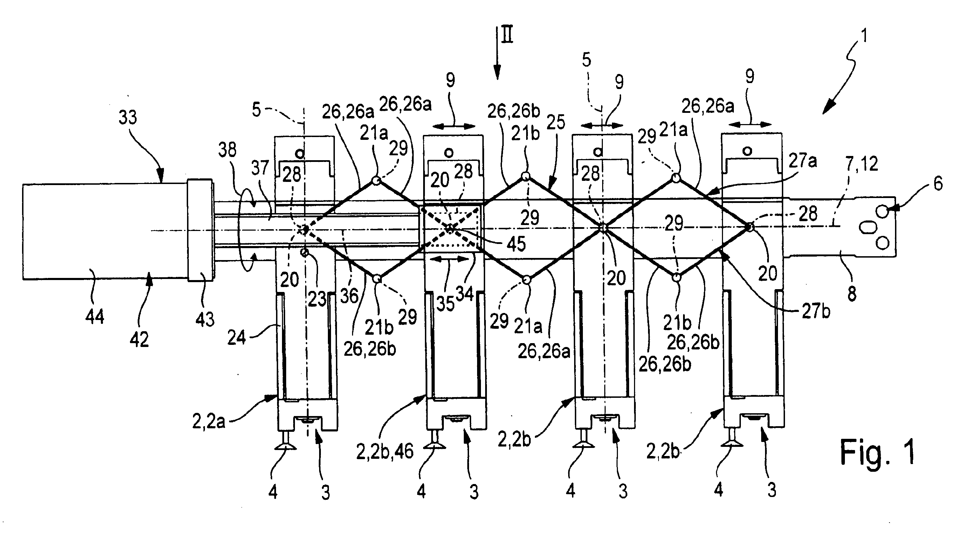

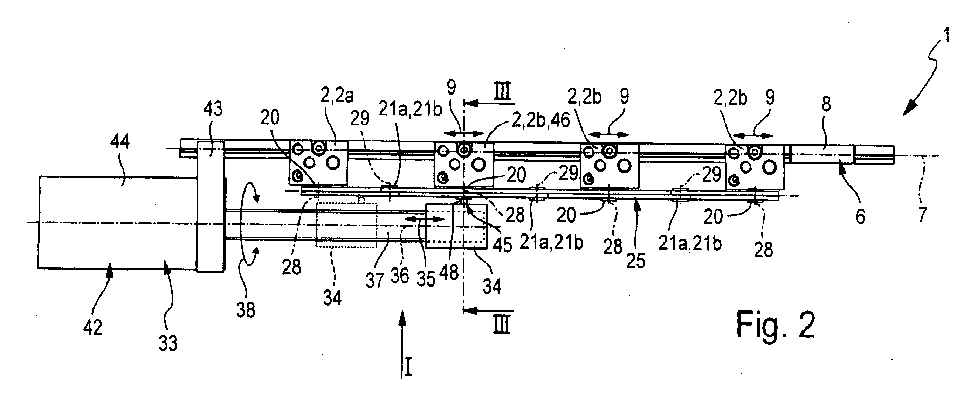

- Figur 1: eine Seitenansicht einer erfindungsgemäßen Handhabungsvorrichtung bevorzugten Aufbaus, wobei die Blickrichtung entsprechend Pfeil I aus Figur 2 orientiert ist,
- Figur 2: eine Draufsicht der Handhabungsvorrichtung mit Blickrichtung gemäß Pfeil II-II aus Figuren 1 und 3, und
- Figur 3: einen Querschnitt durch die Handhabungsvorrichtung gemäß Schnittlinie III-III aus Figur 2, wobei der Bereich der Linearführungseinrichtung und der Handhabungseinheiten ungeschnitten abgebildet ist.

Die in ihrer Gesamtheit mit Bezugsziffer 1 bezeichnete Handhabungsvorrichtung eignet sich zur gleichzeitigen Handhabung und insbesondere Umpositionierung mehrerer Gegenstände, die im Einzelnen nicht abgebildet sind.

Die Handhabungsvorrichtung 1 enthält mehrere individuelle Handhabungseinheiten 2 - exemplarisch vier Stück -, die jeweils an einer Arbeitsseite 3 mindestens einen Endeffektor 4 aufweisen. Der Endeffektor 4 ist insbesondere als Greifmittel konzipiert und besteht beim Ausführungsbeispiel aus einem Sauggreifer, der in der Lage ist, einen Gegenstand auf der Basis eines Unterdruckes anzusaugen und vorübergehend festzuhalten.

Als Greifmittel kommen allerdings auch rein mechanisch arbeitende Greiferstrukturen in Frage, beispielsweise Backengreifer.

Die Handhabungseinheiten 2 sind so orientiert, dass ihre Arbeitsseiten 3 in die gleiche Richtung weisen, exemplarisch nach unten.

Vorzugsweise haben die Handhabungseinheiten 2 eine längliche Gestalt. Ihre Längsachsen 5 sind dabei zweckmäßigerweise parallel zueinander ausgerichtet.

Die Handhabungseinheiten 2 sind in der Achsrichtung einer gedachten Hauptachse 7 aufeinanderfolgend angeordnet. Im Betrieb ist die Handhabungsvorrichtung 1 insbesondere so orientiert, dass die Hauptachse 7 horizontal verläuft. Die Längsachsen 5 der Handhabungseinheiten 2 erstrecken sich zweckmäßigerweise rechtwinkelig zu der Hauptachse 7, wobei sie bei einer bevorzugten Ausrichtung der Handhabungsvorrichtung 1 vertikal verlaufen.

Sämtliche Handhabungseinheiten 2 sind an einer Linearführungseinrichtung 6 der Handhabungsvorrichtung 1 angeordnet. Eine der Handhabungseinheiten 2 - im Folgenden auch als ortsfeste Handhabungseinheit 2a bezeichnet - ist dabei ortsfest an der Linearführungseinrichtung 6 fixiert. Alle anderen Handhabungseinheiten 2 sind an der Linearführungseinrichtung 6 in Achsrichtung der Hauptachse 7 verschiebbar gelagert. Diejenigen der Handhabungseinheiten 2, die bezüglich der Linearführungseinrichtung 6 verschiebbar sind, werden im Folgenden auch als verschiebbare Handhabungseinheiten 2b bezeichnet. Jede verschiebbare Handhabungseinheit 2b kann eine durch einen Doppelpfeil angedeutete translatorische Verfahrbewegung 9 in Achsrichtung der Hauptachse 7 relativ zur Linearführungseinrichtung 6 und auch relativ zu der ortsfesten Handhabungseinheit 2a ausführen.

Gemäß einem bevorzugten Aufbau enthält die Linearführungseinrichtung 6 eine insbesondere einstückig ausgebildete Führungsschiene 8. Die Führungsschiene 8 hat lineare Erstreckung mit einer Längsachse 12, die mit der Hauptachse 7 zusammenfällt oder parallel zu dieser verläuft.

Die Führungsschiene 8 hat zweckmäßigerweise einen länglichen Querschnitt mit zwei einander entgegengesetzten schmalen Längsseiten 13, die jeweils eine sich in der Achsrichtung der Längsachse 12 erstreckende Führungsfläche 14 ausbilden. Bei einer bevorzugten Ausrichtung der Handhabungsvorrichtung 1 ist die Längsachse 15 des Querschnittes der Führungsschiene 8 vertikal orientiert, so dass die beiden Führungsflächen 14 vertikal nach oben und nach unten weisen.

Zweckmäßigerweise ist die Führungsschiene 8 das einzige Führungsmittel der Linearführungseinrichtung 6, mit dem die verschiebbaren Handhabungseinheiten 2b kooperieren.

Jede Handhabungseinheit 2 verfügt zweckmäßigerweise an einer Rückseite 16 über eine Aussparung 17, in die die Führungsschiene 8 eintaucht und die von Gegenführungsflächen 18 der Handhabungseinheit 2 flankiert ist, die jeweils gleitverschieblich oder durch Wälzlagermittel geführt an einer der beiden Führungsflächen 14 der Führungsschiene 8 anliegen. Die Handhabungseinheiten 2 sind insbesondere reiterähnlich an die Führungsschiene 8 angesetzt.

Durch den paarweisen Führungskontakt zwischen je einer Führungsfläche 14 und einer Gegenführungsfläche 18 wird zweckmäßigerweise eine Führungsebene 22 definiert, die parallel zu der Hauptachse 7 verläuft und die bei einer bevorzugten Ausrichtung der Handhabungsvorrichtung 1 eine Vertikalebene ist.

Die ortsfeste Handhabungseinheit 2a kann in gleicher Weise wie die verschiebbaren Handhabungseinheiten 2b ausgebildet und auf die Führungsschiene 8 aufgesetzt sein. Im Unterschied zu den verschiebbaren Handhabungseinheiten 2b ist sie jedoch bezüglich der Führungsschiene 8 unverschiebbar blockiert, was exemplarisch mittels einer Klemmschraube 23 realisiert wird, die durch das Gehäuse 24 der ortsfesten Handhabungseinheit 2a hindurchgeschraubt und mit der Führungsschiene 8 verspannt ist.

Im Rahmen ihrer Verfahrbewegungen 9 können die verschiebbaren Handhabungseinheiten 2b sowohl relativ zueinander als auch relativ zu der ortsfesten Handhabungseinheit 2a verschoben werden.

Die Handhabungsvorrichtung 1 enthält eine Hebelstruktur 25, die sich aus einer Mehrzahl von als Koppelhebel 26 bezeichneten Hebeln zusammensetzt.

Durch eine Zwangskopplung der Handhabungseinheiten 2 mittels der Hebelstruktur 25 wird erreicht, dass die verschiebbaren Handhabungseinheiten 2b untereinander stets nur gleichgerichtet verschiebbar sind, und zwar entweder unter gleichzeitiger Vergrößerung des gegenseitigen Abstandes oder unter gleichzeitiger Verringerung des gegenseitigen Abstandes. Bei der im Sinne einer Abstandsvergrößerung erfolgenden Bewegung vergrößert sich auch der Abstand zwischen der ortsfesten Handhabungseinheit 2a und der dieser unmittelbar benachbarten verschiebbaren Handhabungseinheit 2b. Ebenso verringert sich der Abstand zwischen der ortsfesten Handhabungseinheit 2a und der dieser benachbarten verschiebbaren Handhabungseinheit 2b, wenn die verschiebbaren Handhabungseinheiten 2b im Sinne einer Abstandsverringerung bewegt werden.

Die Hebelstruktur 25 ist zweckmäßigerweise scherenartig beziehungsweise nach Art eines Scherengitters aufgebaut. Hierbei enthält sie zwei Hebelstränge 27a, 27b, die jeweils einen zick-zack-förmigen Längsverlauf haben und sich jeweils aus in Längsrichtung aneinandergereihten und gelenkig miteinander verbundenen Koppelhebeln 26 zusammensetzen. Der eine, erste Hebelstrang 27a enthält mehrere gelenkig miteinander verbundene erste Koppelhebel 26, 26a, der andere, zweite Hebelstrang 27b enthält mehrere gelenkig miteinander verbundene zweite Koppelhebel 26, 26b.

An jeder Handhabungseinheit 2 befindet sich ein diesbezüglich ortsfestes erstes Gelenk 20. Jedes erste Gelenk 20 definiert eine zu der Führungsebene 22 rechtwinkelige erste Gelenkachse 28. Jeder Koppelhebel 26a, 26b jedes Hebelstranges 27a, 27b ist an dem ersten Gelenk 20 jeweils einer Handhabungseinheit 2 um die dieser zugeordnete erste Gelenkachse 28 verschwenkbar gelagert.

In Stranglängsrichtung aufeinanderfolgende Koppelhebel 26a, 26b jedes Hebelstranges 27a, 27b sind untereinander über je ein zweites Gelenk 21a, 21b gelenkig beziehungsweise schwenkbeweglich miteinander verbunden, wobei jedes zweite Gelenk 21a, 21b eine zu den ersten Gelenkachsen 28 parallele zweite Gelenkachse 29 definiert.

Die an der ersten und letzten Handhabungseinheit 2 der Reihe von Handhabungseinheiten 2 angelenkten Koppelhebel 26 sind als einarmige Hebel konzipiert. Sie sind jeweils einenends an einer ersten Gelenkachse 28 und andernends an einer zweiten Gelenkachse 29 gelagert. Dabei divergieren sie ausgehend von der ersten Gelenkachse 28 in Richtung zur benachbarten Handhabungseinheit 2 mit bezüglich der Hauptachse 7 identischen Winkeln auseinander.

Diejenigen Koppelhebel 26, die an einer zwischen zwei Handhabungseinheiten 2 angeordneten Handhabungseinheit 2 angelenkt sind, sind als zweiarmige Hebel konzipiert, wobei sie im Bereich ihrer Längsmitte an einem ersten Gelenk 20 gelagert sind und mit ihren beiden Enden jeweils an einem zweiten Gelenk 21a beziehungsweise 21b gelagert sind. Da an jedem Gelenk 20, 21 jeweils sowohl ein erster als auch ein zweiter Koppelhebel 26a, 26b gelagert sind, ergibt sich in Bezug auf diejenigen Koppelhebel 26, die an einer zwischen zwei Handhabungseinheiten 2 angeordneten Handhabungseinheit 2 gelagert sind, eine sich scherenähnlich überkreuzende Hebelkonstellation.

Die zweiten Gelenke 21a, 21b liegen frei im Raum und sind außer mit den durch sie verbundenen Koppelhebeln 26 an keinen weiteren Komponenten der Handhabungsvorrichtung 1 fixiert.

Die Handhabungseinheiten 2 können eine auseinandergefahrene beziehungsweise auseinandergespreizte Stellung einnehmen, in der benachbarte Handhabungseinheiten 2 relativ weit voneinander beabstandet sind, wobei der Abstand zweckmäßigerweise jeweils identisch ist. Entsprechendes gilt für die an den Handhabungseinheiten 2 angeordneten Endeffektoren 4. Die ersten Gelenke 20 nehmen dabei in Achsrichtung der Hauptachse 7 einen maximalen Abstand zueinander ein, der als auseinandergefahrener Abstand bezeichnet werden soll. Die zweiten Gelenke 21a, 21b nehmen dabei eine quer zu der Hauptachse 7 einander angenäherte Position ein.

Durch Ausübung einer Stellkraft auf eine beliebige der verschiebbaren Handhabungseinheiten 2b in Richtung der ortsfesten Handhabungseinheit 2a nähern sich automatisch sämtliche Handhabungseinheiten 2 aneinander an, bis sie eine zusammengefahrene Stellung einnehmen, in der sie sehr eng beieinanderliegen können. Der Abstand zwischen benachbarten ersten Gelenken 20 hat sich dabei auf einen bezüglich des ausgefahrenen Abstands verringerten eingefahrenen Abstand reduziert. Entsprechendes gilt für die an den Handhabungseinheiten 2 angeordneten Endeffektoren 4. Gleichzeitig nehmen die in Achsrichtung der Hauptachse 7 auf gleicher Höhe angeordneten zweiten Gelenke 21a, 21b quer zu der Hauptachse 7 einen im Vergleich zu der ausgefahrenen Stellung größeren Abstand zueinander ein.

Die gleiche kinematische Kopplung lässt sich im Übrigen auch dadurch erzielen, dass die Hebelstruktur 25 über nur einen Hebelstrang 27a oder 27b verfügt.

Die Handhabungsvorrichtung 1 enthält außerdem eine Antriebseinrichtung 33, mit deren Hilfe sich die Verfahrbewegungen 9 der verschiebbaren Handhabungseinheiten 2b hervorrufen lassen.

Die Antriebseinrichtung 33 enthält ein Antriebselement 34, das zu einer durch einen Doppelpfeil angedeuteten Antriebsbewegung 35 antreibbar ist, die in Achsrichtung der Hauptachse 7 orientiert ist.

Bei seiner Antriebsbewegung 35 bewegt sich das Antriebselement 34 entlang einer gedachten linearen Antriebslinie 36, die gleich wie die Hauptachse 7 ausgerichtet ist.

Vorzugsweise ist das Antriebselement 34 nach Art einer Mutter ausgebildet oder zumindest mit einem Muttergewinde versehen und auf eine sich linear erstreckende Antriebsspindel 37 aufgeschraubt, deren Längsachse mit der Antriebslinie 36 zusammenfällt.

Die Antriebsspindel 37 ist zu einer Rotationsbewegung 38 um ihre Längsachse in wahlweise dem Uhrzeigersinn oder entgegen dem Uhrzeigersinn antreibbar. Indem das Antriebselement 34 verdrehgesichert ist, führt es bei der Rotation der Antriebsspindel 37 seine Antriebsbewegung 35 entlang der Antriebsspindel 37 aus.

Beim Ausführungsbeispiel ist die Antriebseinrichtung 33 maschineller Art. Sie wird nicht manuell, sondern mittels Fremdenergie betrieben. Exemplarisch enthält sie einen elektrischen Antriebsmotor 42, der die Rotationsbewegung 38 der Antriebsspindel 37 hervorrufen kann.

Über eine beispielsweise als Befestigungsschelle ausgebildete Befestigungseinrichtung 43 ist ein Stator 44 der Antriebseinrichtung 33, bezüglich dem das Antriebselement 34 bewegbar ist, ortsfest bezüglich der Linearführungseinrichtung 6 fixiert. Der Stator 44 ist beim Ausführungsbeispiel vom Gehäuse des Antriebsmotors 42 gebildet.

Bei einem alternativen Ausführungsbeispiel ist das Antriebselement 34 Bestandteil einer Antriebsstange oder an einer Antriebsstange angeordnet, die in ihrer mit der Antriebslinie 36 zusammenfallenden Längsrichtung bewegbar ist. In einem solchen Fall kommt als Antriebseinrichtung 33 insbesondere ein pneumatisch oder hydraulisch betätigter Arbeitszylinder in Frage, dessen Gehäuse als Stator 44 fungiert und der durch Fluidbeaufschlagung eine Linearbewegung der Antriebsstange hervorrufen kann.

Die Antriebseinrichtung 33 kann zusätzlich oder alternativ auch manuell betätigbar ausgebildet sein. Beispielsweise kann im Falle des Ausführungsbeispiels anstelle des Antriebsmotors 42 eine manuell drehbare Kurbel an der Antriebsspindel 37 angreifen.

Das Antriebselement 34 ist an einer Krafteinleitungsstelle 45 mit einer, und zwar mit lediglich einer verschiebbaren Handhabungseinheit 2b antriebsmäßig verbunden. Exemplarisch befindet sich die Krafteinleitungsstelle 45 an der der ortsfesten Handhabungseinheit 2a unmittelbar benachbarten verschiebbaren Handhabungseinheit 2b. Die antriebsmäßige Verbindung ist hierbei durch eine feste und insbesondere starre Verbindung realisiert.

Durch die Verbindung des Antriebselementes 34 und der zugeordneten verschiebbaren Handhabungseinheit 2b ergibt sich die schon erwähnte Verdrehsicherung des Antriebselementes 34, die notwendig ist, um bei der Rotation der Antriebsspindel 37 die Antriebsbewegung 35 hervorzurufen.

Die mit dem Antriebselement 34 antriebsmäßig verbundene Handhabungseinheit 2, die im Folgenden auch als Antriebs-Handhabungseinheit 46 bezeichnet sei, macht die Antriebsbewegung 35 des Antriebselementes 34 mit. Somit ergibt sich der oben geschilderte auseinanderfahrende und zusammenfahrende Effekt der Anordnung von Handhabungseinheiten 2 und der an diesen angeordneten Endeffektoren, wenn das Antriebselement 34 zusammen mit der Antriebs-Handhabungseinheit 46 in Achsrichtung der Hauptachse 7 translatorisch verlagert wird.

Ein besonderer Vorteil resultiert daraus, dass die Krafteinleitungsstelle 45 an der Antriebs-Handhabungseinheit 46 auf der gleichen Seite wie die an dieser Antriebs-Handhabungseinheit 46 angeordnete erste Gelenkachse 28 angeordnet ist, wobei sie sich unmittelbar im Bereich dieser ersten Gelenkachse 28 befindet.

Jede Handhabungseinheit 2 hat eine im Folgenden als Vorderseite 47 bezeichnete Seite, wobei sich die Hebelstruktur 25 entlang der Vorderseiten sämtlicher Handhabungseinheiten 2 erstreckt. Die ersten Gelenkachsen 28 befinden sich jeweils im Bereich der Vorderseite 47 der zugeordneten Handhabungseinheit 2.

Die ersten Gelenkachsen 28 sind zweckmäßigerweise jeweils von einem insbesondere zylindrisch ausgebildeten Lagerbolzen 48 gebildet, der an der Vorderseite 47 einer jeweiligen Handhabungseinheit 2 angeordnet ist und von selbiger rechtwinkelig zur Führungsebene 22 wegragt. Die Längsachse des Lagerbolzens 48 entspricht der ersten Gelenkachse 28.

Jeder Lagerbolzen 28 ist Bestandteil eines ersten Gelenkes 20, wobei die zugeordneten Koppelhebel 26a, 26b drehbar beziehungsweise schwenkbeweglich auf den Lagerbolzen 48 aufgesteckt sind. Sie enthalten zu diesem Zweck entsprechende Lagerlöcher.

Die Krafteinleitungsstelle 45 befindet sich zweckmäßigerweise am Lagerbolzen der Antriebs-Handhabungseinheit 46. Das Antriebselement 34 ist zweckmäßigerweise unmittelbar mit dem Lagerbolzen 48 der Antriebs-Handhabungseinheit 46 verbunden. Beispielsweise liegt eine Schraubverbindung, Klebeverbindung oder Schweißverbindung vor.

Die zweiten Gelenke 21a, 21b können auch durch Bolzen realisiert sein, die die jeweils aneinander angelenkten Koppelhebel 26 durchsetzen.

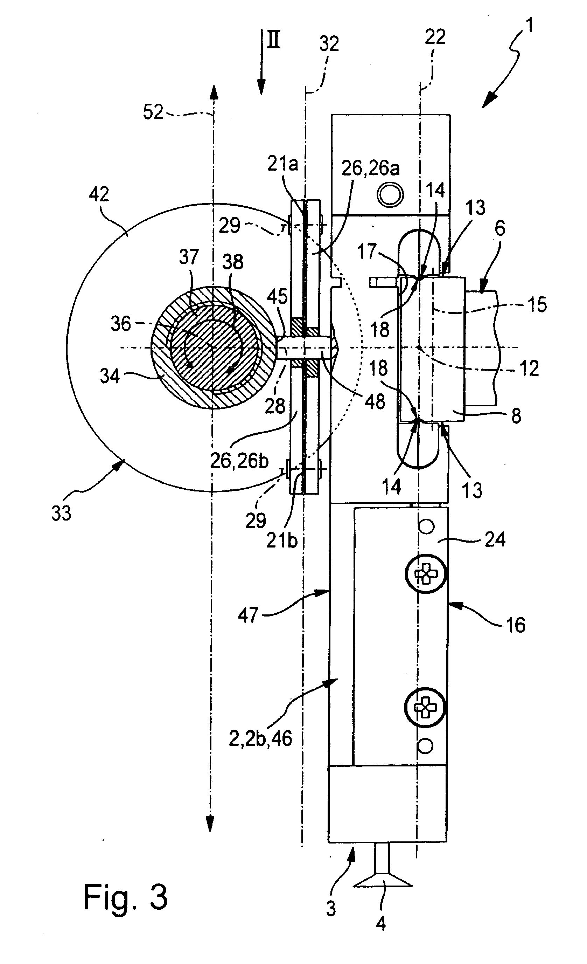

Wie insbesondere aus Figur 3 gut ersichtlich ist, befindet sich die Krafteinleitungsstelle 45 zweckmäßigerweise auf der der Antriebs-Handhabungseinheit 46 in Achsrichtung der ersten Gelenkachse 28 entgegengesetzten Seite der Hebelstruktur 25. Letztere sitzt also zwischen der Antriebs-Handhabungseinheit 46 und der Krafteinleitungsstelle 45.

Der Lagerbolzen 48 ist insbesondere mit seiner der Antriebs-Handhabungseinheit 46 entgegengesetzten Stirnseite voraus an dem Antriebselement 34 befestigt.

Das Antriebselement 34 ist der Antriebs-Handhabungseinheit 46 zweckmäßigerweise in Achsrichtung der ersten Gelenkachse 28 mit Abstand vorgelagert. Vorzugsweise liegt das Antriebselement 34 auf der gedanklich verlängerten ersten Gelenkachse 28.

Die erste Gelenkachse 28 liegt zweckmäßigerweise mit der Antriebslinie 36 in einer gemeinsamen Ebene, die beim Ausführungsbeispiel eine Horizontalebene ist.

Auch die anderen ersten Gelenkachsen 28 erstrecken sich zweckmäßigerweise in dieser gemeinsamen Ebene.

Wenn die Linearführungseinrichtung 6 vergleichbar dem Ausführungsbeispiel über eine Führungsschiene 8 zur Linearführung der Handhabungseinheiten 2 verfügt, ist das Antriebselement 34 zweckmäßigerweise so angeordnet, dass es der Führungsschiene 8 in Achsrichtung der ersten Gelenkachsen 28 vorgelagert ist. Zweckmäßigerweise liegen die Längsachse 12 der Führungsschiene 8, die ersten Gelenkachsen 28 und die Antriebslinie 36 in einer gemeinsamen Ebene.

Das Antriebselement 34 liegt zweckmäßigerweise in der sowohl zur Längsachse 12 der Führungsschiene 8 als auch zur ersten Gelenkachse 28 der Antriebs-Handhabungseinheit 46 rechtwinkeligen Richtung, die in Figur 3 bei 52 durch eine strichpunktierte Linie angedeutet ist, auf gleicher Höhe. Besagte rechtwinkelige Richtung 52 ist beim Ausführungsbeispiel eine Vertikalrichtung.

Zweckmäßigerweise ist die Antriebseinrichtung 33 so platziert, dass sie der durch die Führungsschiene 8 definierten Führungsebene 22 auf der gleichen Seite wie die Hebelstruktur 25 mit Abstand vorgelagert ist.

Wenn die Antriebseinrichtung 33 eine Antriebsspindel 37 oder eine Antriebsstange enthält, erstreckt sich diese Antriebsspindel 37 oder Antriebsstange zweckmäßigerweise bezüglich der oben definierten Richtung 52 auf gleicher Höhe wie die Führungsschiene 8 und dabei parallel zu dieser Führungsschiene 8. Wenn die Handhabungseinheiten 2 sich in der zusammengefahrenen Stellung befinden, liegen zweckmäßigerweise sämtliche Handhabungseinheiten 2 in dem Bereich zwischen der Führungsschiene 8 und der diesbezüglich parallelen Antriebsspindel 37 oder Antriebsstange.

Von den vorhandenen, in einer Reihe aufeinanderfolgend angeordneten Handhabungseinheiten 2 ist lediglich eine einzige Handhabungseinheit 2 ortsfest bezüglich der Linearführungseinrichtung 6 fixiert, während die anderen Handhabungseinheiten 2 bezüglich der Linearführungseinrichtung 6 verschiebbar sind. Welche der vorhandenen Handhabungseinheiten 2 dabei als ortsfest fixierte Handhabungseinheit 2 ausgebildet bzw. genutzt wird ist prinzipiell beliebig. Besonders vorteilhaft ist es jedoch, wenn entweder die Reihenerste oder die Reihenletzte aus der Reihe von Handhabungseinheiten 2 ortsfest fixiert ist. Als Antriebs-Handhabungseinheit 46 ist dabei jeweils eine beliebige der nicht fixierten und verschiebbaren Handhabungseinheiten 2 nutzbar.

Die Handhabungsvorrichtung 1 eignet sich in besonderer Weise dazu, mittels an den Handhabungseinheiten 2 angeordneten und als Greifmittel ausgebildeten Endeffektoren 4 gleichzeitig mehrere Gegenstände zu ergreifen, die in einem engen Abstand nebeneinander angeordnet sind. Dies geschieht in einem Zustand der Handhabungsvorrichtung 1, in dem die Handhabungseinheiten 2 zusammengefahren bzw. aneinander angenähert sind. Wenn die Gegenstände dann ergriffen sind, können sie in einem größeren Abstand zueinander positioniert werden, indem die Handhabungseinheiten 2 auseinandergefahren bzw. auseinandergespreizt werden. Somit können nahe beieinanderliegende Gegenstände aufgenommen und nach anschließendem Auseinanderfahren der Handhabungseinheiten 2 mit größerem Abstand zueinander wieder abgelegt werden. Ein solcher Anwendungsfall findet sich beispielsweise im Zusammenhang mit der Fertigung elektronischer Komponenten, wobei es sich bei den Gegenständen um Computerchips handeln kann.

Abschließend wird noch darauf hingewiesen, dass mehrere Handhabungsvorrichtungen 1 der erfindungsgemäßen Art zu einem Handhabungsmodul zusammengefasst werden können, innerhalb dessen sie relativ zueinander bewegbar und positionierbar sein können.

## Patentansprüche

1. Handhabungsvorrichtung zur Handhabung von Gegenständen, mit mehreren in Achsrichtung einer Hauptachse (7) aufeinanderfolgend angeordneten Handhabungseinheiten (2), die jeweils eine längliche Gestalt mit parallel zueinander ausgerichteten und sich rechtwinkelig zu der Hauptachse (7) erstreckenden Längsachsen (5) aufweisen und von denen zumindest mehrere in Achsrichtung der Hauptachse (7) verschiebbar an einer Linearführungseinrichtung (6) gelagert sind, ferner mit einer alle Handhabungseinheiten (2) kinematisch miteinander koppelnden Hebelstruktur (25), die mehrere untereinander gelenkig verbundene und jeweils an einer der Handhabungseinheiten (2) um eine dieser seitlich zugeordneten Gelenkachse (28) verschwenkbar gelagerte Koppelhebel (26) aufweist und die bewirkt, dass beim Verschieben nur einer Handhabungseinheit (2, 46) auch jede weitere verschiebbar gelagerte Handhabungseinheit (2, 2b) verschoben wird, und mit einer Antriebseinrichtung (33), die ein zu einer Antriebsbewegung (35) in Achsrichtung der Hauptachse (7) antreibbares Antriebselement (34) aufweist, das an einer Krafteinleitungsstelle (45) mit einer der verschiebbaren Handhabungseinheiten (2, 2b, 46) antriebsmäßig verbunden ist, wobei die Krafteinleitungsstelle (45) an der mit dem Antriebselement (34) antriebsmäßig verbundenen Handhabungseinheit (2, 2b, 46) auf der gleichen Seite wie die zugeordnete Gelenkachse (28) im Bereich dieser Gelenkachse (28) angeordnet ist und wobei die Linearführungseinrichtung (6) eine eine Führungsebene (22) definierende Führungsschiene (8) mit linearer Erstreckung aufweist, deren Längsachse (12) mit der Hauptachse (7) zusammenfällt oder parallel zu dieser verläuft und an der die Handhabungseinheiten (2) angeordnet sind, **dadurch gekennzeichnet, dass** die Gelenkachsen (28) rechtwinkelig zur Führungsebene (22) der Führungsschiene (8) ausgerichtet sind, wobei die Handhabungseinheiten (2) mit rechtwinkelig zu den Gelenkachsen (28) ausgerichteten Längsachsen (5) an der Führungsschiene (8) angeordnet sind und wobei die Antriebseinrichtung (33) der Führungsebene (22) auf der gleichen Seite wie die Hebelstruktur (25) mit Abstand vorgelagert ist.

2. Handhabungsvorrichtung nach Anspruch 1, **dadurch gekennzeichnet, dass** die der antriebsmäßig mit dem Antriebselement (34) verbundenen Handhabungseinheit (2, 2b, 46) zugeordnete Gelenkachse (28) von einem von der Handhabungseinheit (2, 2b, 46) wegragenden Lagerbolzen (48) definiert ist, wobei das Antriebselement (34) mit diesem Lagerbolzen (48) antriebsmäßig verbunden ist.

3. Handhabungsvorrichtung nach Anspruch 2, **dadurch gekennzeichnet, dass** der Lagerbolzen (48) unbeweglich an der zugeordneten Handhabungseinheit (2, 2b, 46) befestigt ist und mindestens ein Koppelhebel (26) schwenkbeweglich auf den Lagerbolzen (48) aufgesteckt ist.

4. Handhabungsvorrichtung nach einem der Ansprüche 1 bis 3, **dadurch gekennzeichnet, dass** die Krafteinleitungsstelle (45) auf der der zugeordneten Handhabungseinheit (2, 2b, 46) in Achsrichtung der Gelenkachse (28) abgewandten Seite der Hebelstruktur (25) angeordnet ist.

5. Handhabungsvorrichtung nach einem der Ansprüche 1 bis 4, **dadurch gekennzeichnet, dass** das Antriebselement (34) im Bereich der Gelenkachse (28) mit der zugeordneten Handhabungseinheit (2, 2b, 46) fest verbunden ist.

6. Handhabungsvorrichtung nach einem der Ansprüche 1 bis 5, **dadurch gekennzeichnet, dass** das Antriebselement (34) der mit ihm antriebsmäßig verbundenen Handhabungseinheit (2, 2b, 46) in Achsrichtung der zugeordneten Gelenkachse (28) mit Abstand vorgelagert ist.

7. Handhabungsvorrichtung nach einem der Ansprüche 1 bis 6, **dadurch gekennzeichnet, dass** das Antriebselement (34) bei seiner Antriebsbewegung (35) entlang einer linearen Antriebslinie (36) bewegbar ist, wobei diese Antriebslinie (36) in einer gemeinsamen Ebene mit den den Handhabungseinheiten (2) zugeordneten Gelenkachsen (28) verläuft.

8. Handhabungsvorrichtung nach einem der Ansprüche 1 bis 7, **dadurch gekennzeichnet, dass** das Antriebselement (34) nach Art einer Mutter axial bewegbar mit einer rotativ antreibbaren Antriebsspindel (37) in Eingriff steht, wobei sich die Längsachse der Antriebsspindel (37) zweckmäßigerweise zumindest im Wesentlichen in einer gemeinsamen Ebene mit den den Handhabungseinheiten (2) zugeordneten Gelenkachsen (28) erstreckt.

9. Handhabungsvorrichtung nach einem der Ansprüche 1 bis 7, **dadurch gekennzeichnet, dass** das Antriebselement (34) an einer zu einer Linearbewegung in seiner Längsrichtung antreibbaren Antriebsstange angeordnet ist, wobei sich die Längsachse zweckmäßigerweise zumindest im Wesentlichen in einer gemeinsamen Ebene mit den den Handhabungseinheiten (2) zugeordneten Gelenkachsen (28) erstreckt.

10. Handhabungsvorrichtung nach einem der Ansprüche 1 bis 9, **dadurch gekennzeichnet, dass** die Antriebseinrichtung (33) vom manuell betätigbaren Typ und/oder vom beispielsweise mittels Fluidkraft oder elektrisch betätigbaren maschinellen Typ ist.

11. Handhabungsvorrichtung nach einem der Ansprüche 1 bis 10, **dadurch gekennzeichnet, dass** das Antriebselement (34) der Führungsschiene (8) in Achsrichtung der Gelenkachsen (28) mit Abstand vorgelagert ist, wobei zweckmäßigerweise die Längsachse (12) der Führungsschiene (8), die den Handhabungseinheiten (2) zugeordneten Gelenkachsen (28) und eine lineare Antriebslinie (36), der entlang sich das Antriebselement (34) bei seiner Antriebsbewegung (35) bewegt, in einer gemeinsamen Ebene liegen.

12. Handhabungsvorrichtung nach einem der Ansprüche 1 bis 11, **dadurch gekennzeichnet, dass** von den mehreren in einer Reihe angeordneten Handhabungseinheiten (2) eine erste Handhabungseinheit (2, 2a) dieser Reihe bezüglich der Linearführungseinrichtung (6) ortsfest fixiert ist.

13. Handhabungsvorrichtung nach einem der Ansprüche 1 bis 12, **dadurch gekennzeichnet, dass** die Hebelstruktur (25) mindestens einen sich aus aneinander angelenkten Koppelhebeln (26) zusammensetzenden, einen zick-zack-artigen Längsverlauf aufweisenden Hebelstrang (27a, 27b) enthält.

14. Handhabungsvorrichtung nach Anspruch 13, **dadurch gekennzeichnet, dass** die Hebelstruktur (25) scherenartig aus zwei sich überkreuzenden Hebelsträngen (27a, 27b) aufgebaut ist, wobei an jeder Handhabungseinheit (2) über eine gemeinsame Gelenkachse (28) jeweils ein Koppelhebel (26a, 26b) beider Hebelstränge (25) gelagert ist.

## Claims

1. Handling device for handling objects, comprising a plurality of handling units (2) which are arranged successively in the axial direction of a main axis (7), each of which has an oblong shape with longitudinal axes (5) oriented parallel to one another and extending at right angles to the main axis (7), and at least several of which are mounted on a linear guide device (6) for movement in the axial direction of the main axis (7), further comprising a lever structure (25) which kinematically couples all handling units (2) to one another, which comprises a plurality of coupling levers (26) pin-connected to one another and each being mounted on one of the handling units (2) for pivoting about a pivot axis (28) laterally assigned thereto, and which causes, if only one handling unit (2, 46) is displaced, the displacement of all further movably mounted handling units (2, 2b), and further comprising a drive unit (33) having a drive element (34) which can be driven to perform a drive movement (35) in the axial direction of the main axis (7) and which is drive-connected to one of the movable handling units (2, 2b, 46) at a force introduction point (45), wherein the force introduction point (45) on the handling unit (2, 2b, 46) which is drive-connected to the drive element (34) is located on the same side as the associated pivot axis (28) in the region of the said pivot axis (28), and wherein the linear guide device (6) has a guide rail (8) of linear extension, which defines a guide plane (22) and the longitudinal axis (12) of which coincides with the main axis (7) or extends parallel thereto, and on which the handling units (2) are mounted, **characterised in that** the pivot axes (28) are oriented at right angles to the guide plane (22) of the guide rail (8), wherein the handling units (2) are arranged on the guide rail (8) with longitudinal axes (5) oriented at right angles to the pivot axes (28), and wherein the drive device (33) is located at a distance in front of the guide plane (22) on the same side as the lever structure (25).

2. Handling device according to claim 1, **characterised in that** the pivot axis (28) assigned to the handling unit (2, 2b, 46) which is drive-connected to the drive element (34) is defined by a bearing bolt (48) projecting from the handling unit (2, 2b, 46), the drive element (34) being drive-connected to this bearing bolt (48).

3. Handling device according to claim 2, **characterised in that** the bearing bolt (48) is immovably secured to the associated handling unit (2, 2b, 46) and at least one coupling lever (26) is pivotably fitted to the bearing bolt (48).

4. Handling device according to any of claims 1 to 3, **characterised in that** the force introduction point (45) is located on the side of the lever structure (25) which is remote from the associated handling unit (2, 2b, 46) in the axial direction of the pivot axis (28).

5. Handling device according to any of claims 1 to 4, **characterised in that** the drive element (34) is permanently connected to the associated handling unit (2, 2b, 46) in the region of the pivot axis (28).

6. Handling device according to any of claims 1 to 5, **characterised in that** the drive element (34) of the handling unit (2, 2b, 46) drive-connected thereto is located at a distance in front of the associated pivot axis (28) in the axial direction.

7. Handling device according to any of claims 1 to 6, **characterised in that** the drive element (34) is in its drive movement (35) movable along a linear drive line (36), the drive line (36) extending in a common plane with the pivot axes (28) assigned to the handling units (2).

8. Handling device according to any of claims 1 to 7, **characterised in that** the drive element (34) is in engagement in the manner of a nut and axially movably with a drive spindle (37) capable of being driven to rotate, the longitudinal axis of the drive spindle (37) expediently extending at least substantially in a common plane with the pivot axes (28) assigned to the handling units (2).

9. Handling device according to any of claims 1 to 7, **characterised in that** the drive element (34) is located on a drive rod which can be driven to perform a linear movement in its longitudinal direction, the longitudinal axis expediently extending at least substantially in a common plane with the pivot axes (28) assigned to the handling units (2).

10. Handling device according to any of claims 1 to 9, **characterised in that** the drive device (33) is of a manually operated type and/or of a mechanical type which may for example be operated by fluid or electric power.

11. Handling device according to any of claims 1 to 10, **characterised in that** the drive element (34) is located at a distance in front of the guide rail (8) in the axial direction of the pivot axes (28), the longitudinal axis (12) of the guide rail (8), the pivot axes (28) assigned to the handling units (2) and a linear drive line (36) along which the drive element (34) moves while performing its drive movement (35) expediently lying in a common plane.

12. Handling device according to any of claims 1 to 11, **characterised in that**, of the plurality of handling units (2) arranged in a row, a first handling unit (2, 2a) of this row is located in a stationary manner relative to the linear guide device (6).

13. Handling device according to any of claims 1 to 12, **characterised in that** the lever structure (25) comprises a lever train (27a, 27b) composed of coupling levers (26) hinged to one another and having a zigzag longitudinal extension.

14. Handling device according to claim 13, **characterised in that** the lever structure (25) is built up in the manner of scissors from two crossing lever trains (27a, 27b), a coupling lever (26a, 26b) each of both lever trains (25) being mounted on each handling unit (2) by way of a common pivot axis (28).

## Revendications

1. Dispositif de manipulation servant à la manipulation d'objets, comprenant plusieurs unités de manipulation (2) disposées les unes après les autres dans la direction axiale d'un axe principal (7), lesquelles présentent respectivement une forme allongée dotée d'axes longitudinaux (5) orientés les uns par rapport aux autres de manière parallèle et s'étendant de manière à former un angle droit par rapport à l'axe principal (7) et parmi lesquelles au moins plusieurs d'entre elles sont logées au niveau d'un système de guidage linéaire (6) de manière à pourvoir être déplacées par coulissement dans la direction axiale de l'axe principal (7), comprenant en outre une structure de levier (25) couplant les unes aux autres de manière cinématique toutes les unités de manipulation (2), laquelle structure de levier présente plusieurs leviers de couplage (26) reliés les uns aux autres de manière articulée et logés respectivement au niveau de l'une des unités de manipulation (2) de manière à pouvoir pivoter autour d'un axe d'articulation (28) associé sur le côté à ladite unité de manipulation et qui a pour conséquence que lors du déplacement par coulissement d'une seule unité de manipulation (2, 46) chaque autre unité de manipulation (2, 2b) logée de manière à pouvoir se déplacer par coulissement est également déplacée par coulissement, et comprenant un système d'entraînement (33), qui présente un élément d'entraînement (34) pouvant être entraîné pour effectuer un déplacement d'entraînement (35) dans la direction axiale de l'axe principal (7), lequel élément d'entraînement est relié en entraînement, au niveau d'un emplacement d'application d'une force (45), à l'une des unités de manipulation (2, 2b, 46) pouvant être déplacées par coulissement, sachant que l'emplacement d'application d'une force (45) est disposé, au niveau de l'unité de manipulation (2, 2b, 46) reliée en entraînement à l'élément d'entraînement (34), sur le même côté que l'axe d'articulation (28) associé, dans la zone dudit axe d'articulation (28), et sachant que le système de guidage linéaire (6) présente un rail de guidage (8) définissant un plan de guidage (22) et présentant une extension linéaire, dont l'axe longitudinal (12) coïncide avec l'axe principal (7) ou s'étend de manière parallèle par rapport à ce dernier et au niveau duquel sont disposées les unités de manipulation (2), **caractérisé en ce que** les axes d'articulation (28) sont orientés de manière à former un angle droit par rapport au plan de guidage (22) du rail de guidage (8), sachant que les unités de manipulation (2) présentant des axes longitudinaux (5) orientés de manière à former un angle droit par rapport aux axes d'articulation (28) sont disposées au niveau du rail de guidage (8) et sachant que le système d'entraînement (33) du plan de guidage (22) est au préalable installé à une certaine distance sur le même côté que la structure de levier (25).

2. Dispositif de manipulation selon la revendication 1, **caractérisé en ce que** l'axe d'articulation (28) associé à l'unité de manipulation (2, 2b, 46) reliée en entraînement à l'élément d'entraînement (34) est défini par un tourillon de montage (48) faisant saillie de manière à s'éloigner de l'unité de manipulation (2, 2b, 46), sachant que l'élément d'entraînement (34) est relié en entraînement audit tourillon de montage (48).

3. Dispositif de manipulation selon la revendication 2, **caractérisé en ce que** le tourillon de montage (48) est fixé de manière immobile au niveau de l'unité de manipulation (2, 2b, 46) associée, et **en ce qu'**au moins un levier de couplage (26) est enfilé sur le tourillon de montage (48) de manière mobile par pivotement.

4. Dispositif de manipulation selon l'une quelconque des revendications 1 à 3, **caractérisé en ce que** l'emplacement d'application d'une force (45) est disposé sur le côté, opposé à l'unité de manipulation (2, 2b, 46) associée dans la direction axiale de l'axe d'articulation (28), de la structure de levier (25).

5. Dispositif de manipulation selon l'une quelconque des revendications 1 à 4, **caractérisé en ce que** l'élément d'entraînement (34) est relié de manière fixe à l'unité de manipulation (2, 2b, 46) dans la zone de l'axe d'articulation (28).

6. Dispositif de manipulation selon l'une quelconque des revendications 1 à 5, **caractérisé en ce que** l'élément d'entraînement (34) de l'unité de manipulation (2, 2b, 46) reliée en entraînement audit élément d'entraînement est installé au préalable, à une certaine distance, dans la direction axiale de l'axe d'articulation (28) associé.

7. Dispositif de manipulation selon l'une quelconque des revendications 1 à 6, **caractérisé en ce que** l'élément d'entraînement (34) peut être déplacé lors d'un déplacement d'entraînement (35) le long d'une ligne d'entraînement (36) linéaire, sachant que la ligne d'entraînement (36) s'étend dans un plan commun avec les axes d'articulation (28) associés aux unités de manipulation (2).

8. Dispositif de manipulation selon l'une quelconque des revendications 1 à 7, **caractérisé en ce que** l'élément d'entraînement (34) se trouve en prise avec une broche d'entraînement (37) pouvant être entraînée en rotation de manière à pouvoir être déplacée axialement à la manière d'un écrou, sachant que l'axe longitudinal de la broche d'entraînement (37) s'étend, de manière appropriée, au moins sensiblement dans un plan commun avec les axes d'articulation (28) associés aux unités de manipulation (2).

9. Dispositif de manipulation selon l'une quelconque des revendications 1 à 7, **caractérisé en ce que** l'élément d'entraînement (34) est disposé au niveau d'une tige d'entraînement pouvant être entraînée de manière à effectuer un déplacement linéaire dans sa direction longitudinale, sachant que l'axe longitudinal s'étend, de manière appropriée au moins sensiblement dans un plan commun avec les axes d'articulation (28) associés aux unités de manipulation (2).

10. Dispositif de manipulation selon l'une quelconque des revendications 1 à 9, **caractérisé en ce que** le système d'entraînement (33) est du type à actionnement manuel et/ou du type mécanique par exemple à actionnement électrique ou au moyen de la force d'un fluide.

11. Dispositif de manipulation selon l'une quelconque des revendications 1 à 10, **caractérisé en ce que** l'élément d'entraînement (34) du rail de guidage (8) est installé au préalable à une certaine distance dans la direction axiale des axes d'articulation (28), sachant que de manière appropriée l'axe longitudinal (12) du rail de guidage (8), les axes d'articulation (28) associés aux unités de manipulation (2) et une ligne d'entraînement (36) linéaire, qui déplace sur sa longueur, lors de son déplacement d'entraînement (35), l'élément d'entraînement (34), se trouvent dans un plan commun.

12. Dispositif de manipulation selon l'une quelconque des revendications 1 à 11, **caractérisé en ce que** parmi les nombreuses unités de manipulation (2) disposées en une rangée, une première unité de manipulation (2, 2a) de ladite rangée est fixée de manière stationnaire par rapport au système de guidage linéaire (6).

13. Dispositif de manipulation selon l'une quelconque des revendications 1 à 12, **caractérisé en ce que** la structure de levier (25) comporte au moins un brin de levier (27a, 27b) se composant de leviers de couplage (26) articulés les uns aux autres, présentant un tracé longitudinal en forme de zigzag.

14. Dispositif de manipulation selon la revendication 13, **caractérisé en ce que** la structure de levier (25) présente une structure de type ciseau constitué de deux brins de levier (27a, 27b) se croisant, sachant que respectivement un levier de couplage (26a, 26b) des deux brins de levier (25) est installé au niveau de chaque unité de manipulation (2), par l'intermédiaire d'un axe d'articulation (28) commun.
